# EUROPEAN PATENT SPECIFICATION

(11) **EP 2 974 631 B1**
(45) Date of publication and mention of the grant of the patent: **19.04.2017**
(21) Application number: 15176419.8
(22) Date of filing: 13.07.2015
(51) Int. Cl.: A47J 31/06

(54) **FILTER FOR AN ESPRESSO COFFEE MACHINE**
FILTER FÜR EINE ESPRESSO-KAFFEEMASCHINE
FILTRE DESTINÉ À UNE MACHINE À CAFÉ EXPRESSO

(30) Priority: 18.07.2014 IT MI20141312
(43) Date of publication of application: 20.01.2016
(73) Proprietor: Dalla Corte S.r.l., 20021 Baranzate di Bollate (MI) (IT)
(72) Inventor: DALLA CORTE, Paolo, 20026 NOVATE MILANESE (Milano) (IT)
(74) Representative: Zanellato, Gianluca

(56) References cited:
- EP-A1- 0 655 214
- WO-A1-00/07488
- AU-A1- 2009 200 860
- CN-A- 103 027 591
- FR-A1- 2 973 994

## Description

The present invention regards a filter for an espresso coffee machine.

In particular, the present invention regards a double filter, i.e. utilized for simultaneously obtaining two espresso coffee cups.

The filters for a machine for dispensing espresso coffee comprise a container having a bottom wall and a lateral wall fixed to the bottom wall so as to create a compartment for containing a double dose of ground coffee powder.

The bottom wall has a plurality of through holes suitably shaped so as to allow the passage of the infused liquid coffee flow, withholding the powder.

The document WO/0007488 discloses a filter.

The filters are arranged in a filter holder which is, in turn, firmly fixed to a unit for dispensing the pressurized water of an espresso coffee machine.

The filter holder comprises a cylindrical body having an opening for the insertion of the filter arranged at a base.

At the opposite base, the filter holder is closed by a substantially conical body which receives the flow exiting from the filter.

The conical body further comprises a two-way spout for dividing the flow of espresso coffee into two distinct flows, each intended to be collected in a respective cup.

Disadvantageously, the filters of the known type reveal some drawbacks.

Firstly, the filter holders on which the filters of the known type are mounted have areas of stagnation of the exiting coffee. In such areas, the coffee determines the formation of deposits and incrustations which, over time, may alter the organoleptic qualities of the beverage being prepared and may also end up in the cups meant for consumers, making the espresso coffee extremely unpleasant.

The filter holder should thus be subjected to constant cleaning operations to prevent the formation of such incrustations and remove them if already formed.

It should be observed that the operations for cleaning the filter holder provided with the known filter require considerable time. By way of example, it should be observed that such cleaning may require between 5 and 10 minutes.

This implies that the operators designated to prepare the espresso coffee do not have time to execute this maintenance and thus the creation of incrustations is inevitable.

A further disadvantage of the known filters lies in the fact that when the coffee exits from the filter, [it] hits the conical body and the spout of the filter holder which are considerably colder than the coffee and filter.

This contact, which is inevitable before the separation into the two flows and their dispensing, determines a sudden drop of temperature of the espresso coffee. This dispersion of heat may lead to a temperature drop of at least 15°C.

Actually, though being heated by the contact with the dispenser group, the filter holder has a considerable heat dispersion surface.

In this case, if the operator does not use a sufficiently hot cup, the consumer will get lukewarm, flavorless espresso coffee which ends up lost in the movement through the filter holder.

An example of a known filter holder can be observed from document WO 00/07488.

In this context, the technical task on which the present invention is based is to propose a filter for an espresso coffee machine capable of overcoming the aforementioned drawbacks of the prior art.

In particular, an object of the present invention is to provide a filter for an espresso coffee machine which allows making better espresso coffee.

More in particular, an object of the present invention is to propose a filter for an espresso coffee machine capable of obtaining espresso coffee without the usual residual material, at the right temperature and distinguished by a better flavor.

The specified technical task and object are substantially attained by a filter for an espresso coffee machine comprising the technical characteristics described in one or more of the attached claims. Further characteristics and advantages of the present invention shall be more apparent from the exemplifying and non-limiting description of a preferred but non-exclusive embodiment of a filter for an espresso coffee machine, as illustrated in the attached drawings, wherein:

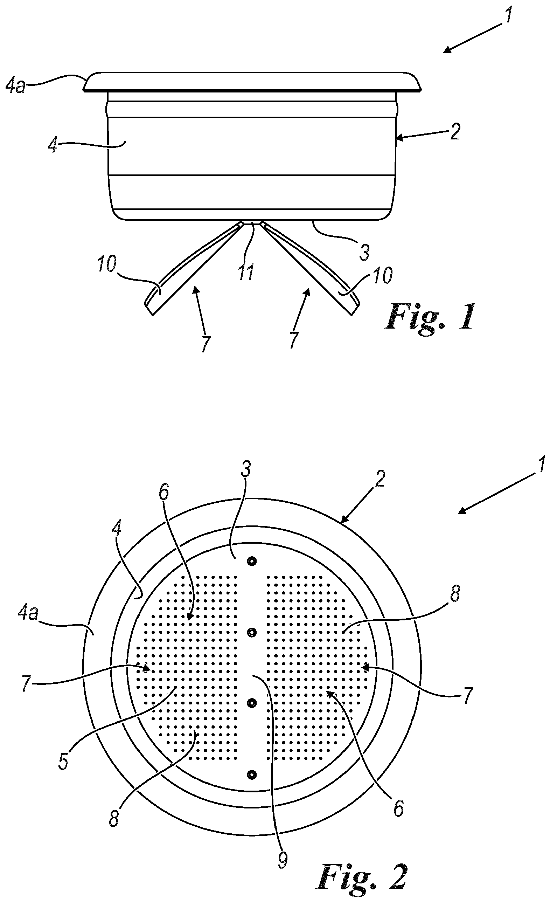

- figure 1 is a front plan view of a filter for an espresso coffee machine according to the present invention;
- figure 2 is a plan view of the filter of figure 1;

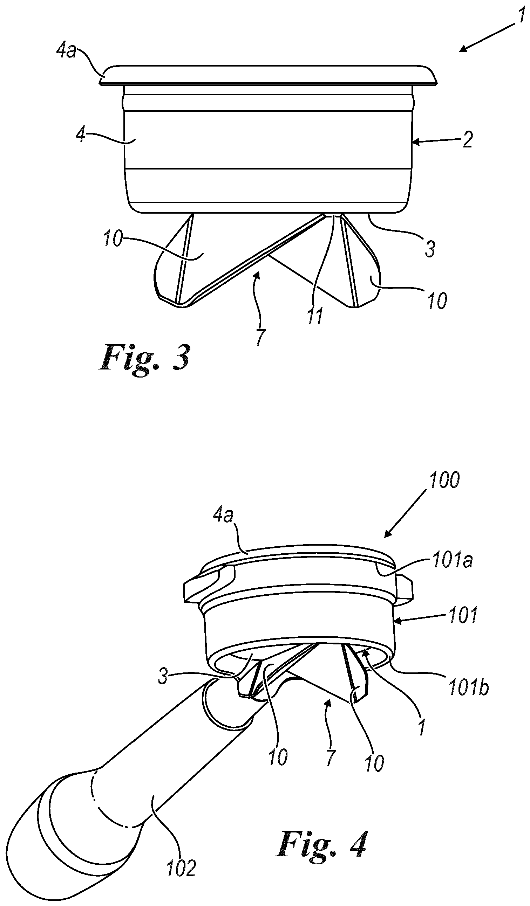

- figure 3 is a front plan view of the filter of figure 1 according to a different angle; and
- figure 4 is a perspective view of a system comprising a filter holder and the filter of figure 1. With reference to the attached figures, a filter for an espresso coffee machine according to the present invention is indicated in its entirety with 1.

The filter 1 comprises a container 2 in which a predetermined amount of ground coffee powder is introduced.

According to the present invention, the container 2 is dimensioned so as to contain a dose required for dispensing two espresso coffees.

The container 2 comprises a bottom wall 3 and at least one lateral wall 4 fixed transverse to the bottom wall 3 for defining a compartment 5 for containing the dose of ground coffee powder.

In the preferred embodiment, the bottom wall 3 is substantially circular-shaped. In addition, the bottom wall 3 is preferably flat.

The lateral wall 4 is orthogonal to the bottom wall 3. Thus, the containment compartment 5 is substantially cylindrical-shaped.

The bottom wall 4 has an edge 4a, opposite to the one directly constrained to the bottom wall 3, folded externally with respect to the containment compartment 5.

This folded edge 4a is intended to end up in abutment against a wall 101 of a filter holder 100 and contributes to hold it in position.

The bottom wall 3 has filtering means 6 which allows the flow of infused water to traverse the bottom wall 3 leaving the coffee powder in the containment compartment 5.

In addition, the filter 1 comprises means 7 for separating the flow exiting from the container 2 active simultaneously and downstream of the filtering means 6. The separation means 7 separate the exiting flow into two separate and distinct flows.

Thus, the separation means 7 are integrated in the bottom wall 3.

The filtering means 6 comprise two perforated portions 8 of the bottom wall 3. The two perforated portions 8 are separate and distinct from each other.

In each perforated portion 8 the through holes are arranged uniformly. By way of example, the holes have a diameter substantially equivalent to 0.030 mm.

The two perforated portions 8 are separated by means of a solid portion 9, i.e. without holes, which extends in a rectilinear fashion along the diameter of the bottom wall 3.

Thus, the two perforated portions 8 are semi-circular-shaped.

Being distinct and separate, the perforated portions 8 at least partly define the means 7 for separating the flow.

As a matter of fact, an equally separate and distinct flow of coffee exiting from the containment compartment 5 passes through each perforated portion 8.

In addition, the separation means 7 comprise two chutes 10 fixed to the bottom wall 3. The chutes 10 develop moving away from the bottom wall 3 along two directions opposite to each other.

Advantageously, each chute 10 is arranged at a respective perforated portion 8 for receiving the corresponding flow thereof and move them further away from each other.

The chutes 10 are arranged according to a symmetric configuration with respect to a plane orthogonal to the bottom wall 3. In detail, the symmetric plane passes along the solid and diametrical portion 9 of the bottom wall 3.

The chutes 10 are made of a single piece with respect to each other. In detail, the chutes 10 are connected to each other by a joining portion 11.

The chutes 10 are constrained to the bottom wall 3 at the solid portion 9.

The chutes 10 are fixed to the bottom wall 3 through a joining portion 11. By way of example, the joining portion 11 is connected to the solid portion 9 of the bottom wall 3 by welding.

Alternatively, the fixing may occur through small round headed screws preferably applied on the containment compartment 5 and closed by hexagonal bolts applied on the joining portion 11.

The chutes 10 have a concave configuration with concavity facing towards the bottom wall 3. This allows easily conveying the flow coming from each perforated portion 8 and easily moving it away.

In addition, the present invention refers to a system which comprises the filter 1 described above and the filter holder 100. The filter holder 100 can be constrained, in a known fashion, to the dispensing unit of a machine for the espresso coffee.

The filter holder 100 comprises the cylindrical body 101 having a first opening 101a intended for the insertion of the filter 1. The first surface 101a is arranged at a base of the cylindrical body 101.

The filter holder 100 can be constrained to the espresso coffee machine at the first opening 101a.

The cylindrical body 101 also comprises a second opening 101b opposite the first. The second opening 101b is arranged at the other base of the cylindrical body 101.

The separation means 7 face the second opening 101b so that the distinct and separate flows of coffee can fall into respective cups without further contact with the filter holder 100.

Preferably, the separation means 7 may project from the cylindrical body 101 through the second opening 101b. In particular, in this embodiment, chutes 10 project from the cylindrical body 101 through the second opening 101b.

A handle 102 is fixed to the cylindrical body 101 to allow the manoeuvring thereof.

The invention thus described achieves the set objectives.

As a matter of fact, the use of the filter according to the present invention does not require the use of filter holders with a conical conveying body and with a separator spout.

The flows of espresso coffee exit from the filter already separated and fall into the respective cups without encountering further contact surfaces. Advantageously, this allows avoiding stagnation that would cause incrustation and thus prevents the residual solids from ending up in the cup.

In addition, this prevents the coffee from cooling excessively, thus remaining sufficiently hot, regardless of the temperature of the cups, and thus having suitable aroma.

It should be observed that the filter thus obtained is also easy to clean due to the fact that all surfaces that come into contact with the coffee are easy to reach.

## Claims

1. Filter for an espresso coffee machine comprising:
- a container (2) having a bottom wall (3) and at least one lateral wall (4) fixed transverse to the bottom wall (3) for defining a compartment (5) for containing a predetermined amount of powdered coffee;
- said bottom wall (3) having filtering means (6) to allow the flow of an infused fluid coming from said containment compartment (5) through said bottom wall (3) ;
- flow separation means (7) operatively active simultaneously and downstream of the filtering means (6) to separate the flow coming from the containment compartment (5) into two separate flows;
**characterized in that** said separation means (7) comprise a pair of chutes (10) fixed to the bottom wall (3) and developing moving away from said bottom wall (3) respectively along two directions opposite to each other.

2. Filter according to claim 1, **characterized in that** said filtering means (6) comprise two distinct perforated portions (8) of the bottom wall (3); said distinct perforated portions (8) defining, at least partly, said separation means (7).

3. Filter according to claim 2, **characterized in that** said bottom wall (3) comprises a solid portion (9) which separates said perforated portions (8).

4. Filter according to any one of the preceding claims, **characterized in that** said chutes (10) are arranged according to a symmetric configuration with respect to a plane orthogonal to the bottom wall (3).

5. Filter according to any one of the preceding claims, **characterized in that** said chutes (10) are made of a single piece with respect to each other.

6. Filter according to any one of the preceding claims, **characterized in that** said separation means (7) are constrained to the bottom wall at said solid portion (9).

7. Filter according to any one of the preceding claims, **characterized in that** said chutes (10) have a concave configuration with concavity facing towards the bottom wall (3).

8. Filter according to any one of the preceding claims, **characterized in that** said bottom wall (3) is flat.

9. Filtering system for espresso coffee machines comprising a filter (1) according to any one of the preceding claims and a filter holder (100) connectable to an espresso coffee machine; said filter (1) being inserted into said filter holder (100); said filter holder (100) comprising a cylindrical support body (101) having a first opening (101a) for the insertion of said filter (1) and a second opening (101b), opposite the first, from which said flow separation means (7) project at least partly.

## Patentansprüche

1. Filter für eine Espresso-Kaffeemaschine umfassend:
- einen Behälter (2) mit einer Bodenwand (3) und mindestens einer quer zur Bodenwand (3) befestigten Seitenwand (4) zur Bildung eines Abteils (5) zum Enthalten einer vorgegebenen Menge von Pulverkaffee;
- die genannte Bodenwand (3) mit Filtermitteln (6), um der Durchfluss eines infundierten Getränks aus dem genannten Behälterabteil (5) durch die genannte Bodenwand (3) zu ermöglichen;
- gleichzeitig betrieblich wirkende und den Filtermitteln (6) nachgeordnete Strömungsablösemittel (7), um der Fluss aus dem Behälterabteil (5) in zwei gesonderten Flüssen zu trennen;
**dadurch gekennzeichnet, dass** die genannten Strömungsablösemittel (7) ein Paar von an die Bodenwand (3) befestigten und sich weg von der genannten Bodenwand (3) jeweils längs zwei einander entgegengesetzter Richtungen erstreckenden Rutschen (10) umfassen.

2. Filter nach Anspruch 1, **dadurch gekennzeichnet, dass** die genannten Filtermittel (6) zwei verschiedene durchlöcherte Abschnitte (8) der Bodenwand (3) umfassen; wobei die genannten durchlöcherten Abschnitte (8) mindestens teilweise die genannten Strömungsablösemittel (7) bilden.

3. Filter nach Anspruch 2, **dadurch gekennzeichnet, dass** die genannte Bodenwand (3) einen die genannten durchlöcherten Abschnitte (8) trennenden festen Abteil (9) umfasst.

4. Filter nach irgendeinem der vorangegangenen Ansprüche, **dadurch gekennzeichnet, dass** die genannten Rutschen (10) nach einer symmetrischen Konfiguration im Vergleich zu einer Ebene senkrecht zur Bodenwand (3) angeordnet sind.

5. Filter nach irgendeinem der vorangegangenen Ansprüche, **dadurch gekennzeichnet, dass** die genannten Rutschen (10) einstückig miteinander ausgebildet sind.

6. Filter nach irgendeinem der vorangegangenen Ansprüche, **dadurch gekennzeichnet, dass** die genannten Strömungsablösemittel (7) zur Bodenwand in dem genannten festen Abteil (9) gezwungen sind.

7. Filter nach irgendeinem der vorangegangenen Ansprüche, **dadurch gekennzeichnet, dass** die genannten Rutschen (10) eine konkave Konfiguration mit einer der Bodenwand (3) zugewandten Konkavität haben.

8. Filter nach irgendeinem der vorangegangenen Ansprüche, **dadurch gekennzeichnet, dass** die genannte Bodenwand (3) flach ist.

9. Filtersystem für Espresso-Kaffeemaschinen umfassend einen Filter (1) nach irgendeinem der vorangegangenen Ansprüche und einen mit einer Espresso-Kaffeemaschine verbundbaren Filterhalter (100); wobei der genannte Filter (1) in den genannten Filterhalter (100) eingeführt wird; wobei der genannte Filterhalter (100) einen zylindrischen Stützkörper (101) umfasst, der eine erste Öffnung (101a) zur Einführung des genannten Filters (1) und eine der ersten gegenüberliegende zweite Öffnung (101b) aufweist, wobei die genannten Strömungsablösemittel (7) mindestens teilweise davon herausragen.

## Revendications

1. Filtre destiné à une machine à café expresso, comprenant:
- un récipient (2) ayant une paroi de fond (3) et au moins une paroi latérale (4) fixée transversalement par rapport à la paroi de fond (3) pour définir un compartiment (5) pour contenir une quantité prédéfinie de café en poudre;
- ladite paroi de fond (3) ayant des moyens de filtrage (6) pour permettre l'écoulement d'un fluide infusé provenant dudit compartiment de réception (5) à travers ladite paroi de fond (3);
- des moyens de séparation de flux (7) agissant simultanément et en aval des moyens de filtrage (6) pour séparer le flux provenant du compartiment de réception (5) en deux flux séparés;
**caractérisé en ce que** lesdits moyens de séparation (7) comprennent une paire de goulottes (10) fixées à la paroi de fond (3) et se développant en s'écartant de ladite paroi de fond (3), respectivement dans deux directions mutuellement opposées.

2. Filtre selon la revendication 1, **caractérisé en ce que** lesdits moyens de filtrage (6) comprennent deux portions perforées (8) distinctes de la paroi de fond (3); lesdites portions perforées (8) distinctes définissant, au moins partiellement, lesdits moyens de séparation (7).

3. Filtre selon la revendication 2, **caractérisé en ce que** ladite paroi de fond (3) comprend une portion solide (9) qui sépare lesdites portions perforées (8).

4. Filtre selon l'une quelconque des revendications précédentes, **caractérisé en ce que** lesdites goulottes (10) sont agencées selon une configuration symétrique par rapport à un plan qui est orthogonal à la paroi de fond (3).

5. Filtre selon l'une quelconque des revendications précédentes, **caractérisé en ce que** lesdites goulottes (10) forment une seule pièce l'une avec l'autre.

6. Filtre selon l'une quelconque des revendications précédentes, **caractérisé en ce que** lesdits moyens de séparation (7) sont contraints à la paroi de fond en correspondance avec ladite portion solide (9).

7. Filtre selon l'une quelconque des revendications précédentes, **caractérisé en ce que** lesdites goulottes (10) ont une configuration concave, la concavité étant orientée vers la paroi de fond (3).

8. Filtre selon l'une quelconque des revendications précédentes, **caractérisé en ce que** ladite paroi de fond (3) est plate.

9. Système de filtrage pour machines à café expresso, comprenant un filtre (1) selon l'une quelconque des revendications précédentes et un porte-filtre (100) qui peut être relié à une machine à café expresso; ledit filtre (1) étant introduit dans ledit porte-filtre (100); ledit porte-filtre (100) comprenant un corps de support cylindrique (101) ayant une première ouverture (101a) pour l'introduction dudit filtre (1) et une seconde ouverture (101b), opposée à la première, de laquelle lesdits moyens de séparation du flux (7) font au moins partiellement saillie.
